# EUROPEAN PATENT SPECIFICATION

(11) **EP 2 851 275 B1**
(45) Date of publication and mention of the grant of the patent: **02.11.2016**
(21) Application number: 13184977.0
(22) Date of filing: 18.09.2013
(51) Int. Cl.: B62D 49/02, B62D 49/04

(54) **Implement attachment**
Geräteanbau
Dispositif de fixation d'outil

(43) Date of publication of application: 25.03.2015
(73) Proprietor: Alfred Kärcher GmbH & Co. KG, 71364 Winnenden (DE)
(72) Inventor: Wagner, Ronny, 573 95 Ydre (SE)
(74) Representative: Awapatent AB

(56) References cited:
- WO-A1-2010/026834
- US-A1- 2003 221 399
- US-A1- 2012 117 833
- US-A1- 2013 026 745

## Description

### Technical field

The present invention relates generally to a device for attaching an implement to a vehicle. More particularly, the present invention relates to an attachment device as defined in the introductory parts of claim 1.

### Background art

An implement carrier vehicle may be utilized for grass mowing, clearing away snow, street sweeping, cleaning of commercial facilities etc. Depending on the present task the implement carrier is connected to a suitable implement, such as a cutting deck, snow thrower, rotating brush, floor cleaner, etc. and the implement carrier operator then performs the desired task. Hence, the implement carrier vehicle is arranged for flexibility, and a variety of different implements can be connected to a frontpart, a rear part and/or a top rear part of the implement carrier vehicle.

When using any of the above mentioned implements, an important feature is to have the implement follow the ground that the implement tool is supposed to affect, may it be cleaning, moving snow, cutting grass etc. A common way to facilitate that is to let the implement tilt in relation to the implement carrier vehicle to follow bumps in the ground. In the prior art patent document DE 10 2010 040 849 and US 2013 026 745 this is facilitated by hydraulic springs, see e.g., Fig. 11, which is a common way in the prior art to facilitate tilting of an implement. Problems with hydraulic springs are that they are expensing and require maintenance periodically. The size and shape of the connection is also hard to influence, since the springs have to have a certain size and have to be placed vertically to allow tilting. The construction also requires some kind of hinging, making the construction fairly complex with many parts. Having many parts makes manufacturing expensive and makes the construction not more robust than the weakest part in the construction. Broken parts leads to reduced efficiency over time of the implement, due to time for maintenance, which in turn leads to increased costs for both the maintenance and increased working time for the operational staff of the implement carrier vehicle. There is thus a need for an improved implement attachment that is able to tilt.

### Summary of the invention

It is an object of the present invention to improve the current state of the art, to solve the above problems, and to provide an improved attachment device. These and other objects are achieved by an attachment device for an implement for an implement carrier vehicle, wherein the attachment device is adapted to be fixedly attached to a vehicle, said attachment device comprising: a main body adapted to attach the implement to, at least two elongated openings in said main body adapted to receive fastening bolts for fastening the implement to the attachment device, which bolts can move in the elongated openings, the at least two elongated openings being placed so that rotation of the implement around an axis of rotation is limited to the movement of the received bolts in said elongated openings, wherein said axis of rotation is located at a height from the bottom side of said main body of less than 40% of the total height of the main body.

Using an attachment device of this type, having a rigid main body as a frame for fastening the implement, makes the construction very robust. The fastening of the implement in the attachment device using bolts that may move in elongated openings makes the rotation or tilting of the attached implement accurate and predictable. Placing the elongated openings so that the allowed rotation or tilting occur around a very low point of rotations assures that the implement follows the ground in a smooth manner.

It is further preferred that the mentioned axis of rotation is located at a height from the bottom side of said main body of less than 20% of the total height of the main body, preferably at a height from the bottom side of said main body of less than 10% of the total height of the main body, most preferably at or slightly below the bottom surface of the main body.

According to a further aspect of the present invention the elongated openings of the attachment device are shaped as arcs, the arcs being part of a circle, said circle having a centre point in said axis of rotation. The arc shape makes the rotational or tilting movement of the implement smooth and reduces friction between the fastening bolts and the elongated opening edges as the fastening bolts move in the elongated openings.

According to a still further aspect of the present invention the main body of the attachment device further comprises a second set of at least two elongated openings in the main body for receiving fastening bolts for fastening the implement to the attachment device, which bolts can move in the elongated openings, the second set of at least two elongated openings being placed so that rotation of the implement around an axis of rotation is limited to the movement of the received bolts in the second set of said at least two elongated openings, said second set of elongated openings also providing a rotation of the implement around said axis of rotation.

The second set of elongated openings are preferably also shaped as arcs, the arcs being part of a second circle, wherein said second circle also has a centre point in said axis of rotation. By having two sets of elongated openings rotating in concentric circles having the same centre point, the stability of the attachment of the implement is enhanced. The main body can also be made more compact then if instead adding further elongated openings along the same circle.

It should be noted that the stability of the fastening of the implement naturally may be further enhanced by having even greater numbers of elongated openings for receiving fastening bolts, all opening allowing rotation around the same axis of rotation. The main body of the attachment device, however, has to have room for all openings, why it is preferred to use only as many openings as is required for atibility purposes.

According to a further aspect of the present invention, the main body of the attachment device has a notch for allowing a drive shaft extending from the implement carrier vehicle to the implement to pass through the main body of said attachment device. Many of the implements that are intended to be attached using the attachment device require a drive shaft for driving the mechanics of the implement, e.g. rotation of a cutting deck implement or rotation of a snow thrower, a brush or other implement. The notch is preferably substantially U-shaped. The notch removes much of the surface possible to use for elongated openings as described above, making the compact stable configuration using elongated openings along two different circles (or more circles) a necessary configuration if stability is to be enhanced while keeping a compact design of the attachment device. A compact design is desired for reducing costly material and keeping the weight of the implement carrier vehicle to a minimum saving fuel and making it easier to transport.

It is further preferred that the axis of rotation of the attachment device is parallel to the main drive direction of the implement carrier vehicle and/or the drive shaft for the implement. Normally an implement is positioned in front or behind a implement carrier vehicle, why the rotation or tilting of the implement is desired to take place around a rotation axis that extends along the driving direction, i.e. forward or aft, of the implement carrier vehicle. The rotation is however preferably implemented so that it takes place close to the ground to be able to follow the ground precisely.

To make the rotation as friction-less as possible the fastening bolts preferably have frictions reducing bearings to facilitate the movement of the bolts in the elongated openings. The bearings are preferably roller bearings but could also be any suitable bearing reducing the friction when the bolts move in elongated openings.

According to a still further aspect of the present invention it is preferred that the elongated openings of the attachment device each have a an angular extension around said axis of rotation (x) in the range of 6-50°, preferably in the range of 12-40°.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 is a cross sectional side view shows an implement carrier vehicle having an attached implement, a rotating snow thrower.
Fig. 2 is an exploded view of an attachment device for an implement according to the present invention.
Fig. 3a is a perspective view of an attachment device according to the present invention showing the implement being rotated to an endpoint relative the implement carrier vehicle.
Fig. 3b is a perspective view of an attachment device according to the present invention showing the implement without rotation relative the implement carrier vehicle.
Fig. 3c is a perspective view of an attachment device according to the present invention showing the implement being rotated to an endpoint relative the implement carrier vehicle (the opposite endpoint to the endpoint shown in Fig. 3a).

### Detailed description of preferred embodiments of the invention

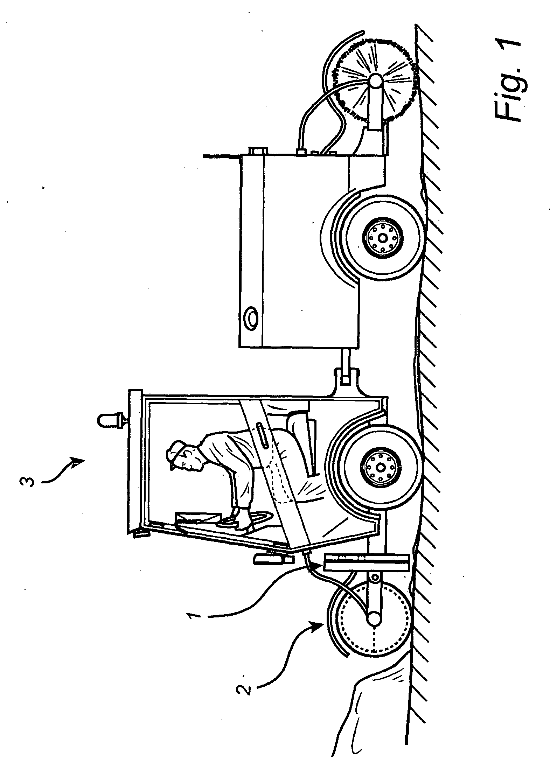

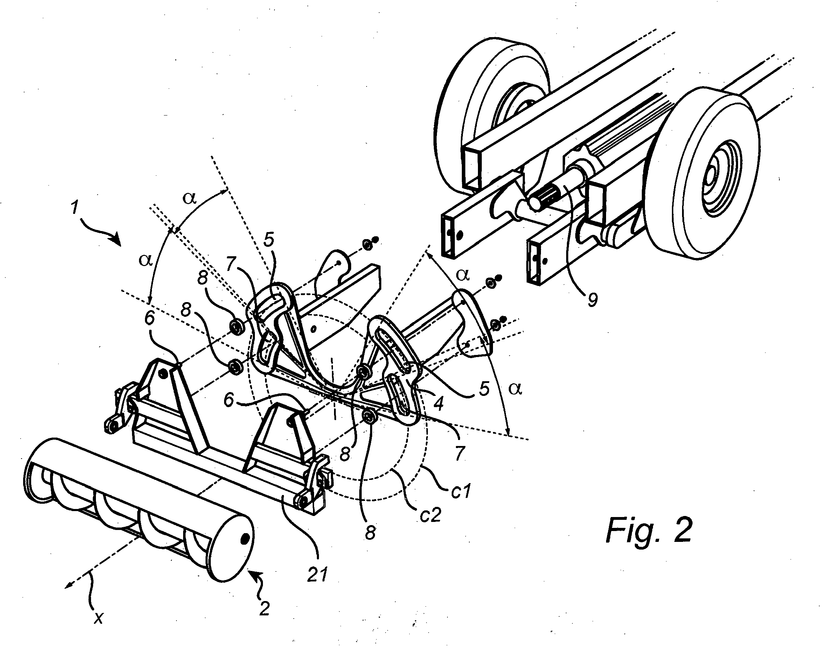

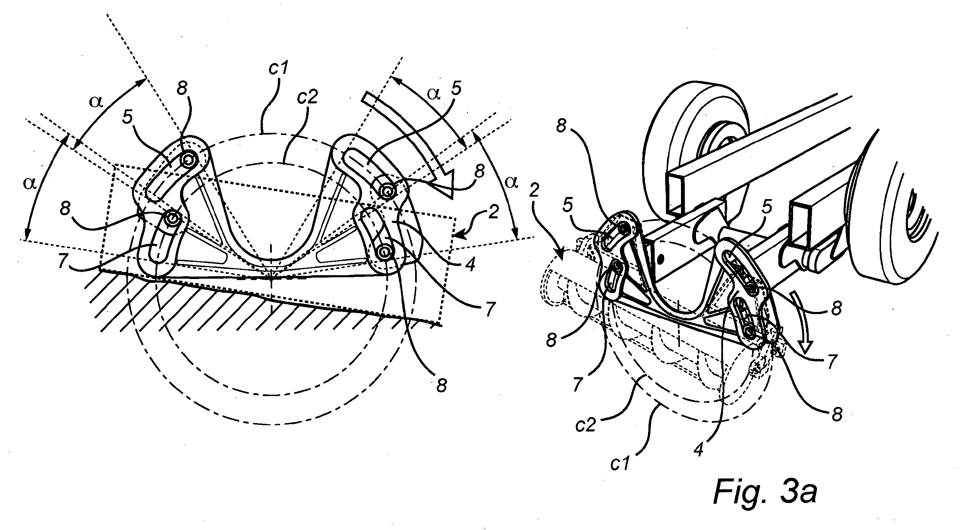

Fig. 1 shows an attachment device 1 arranged for mounting an implement 2 to the front of an implement carrier vehicle 3. The implement 2 is in this case a snow thrower for removing snow from the ground. As the ground that is to be cleared from snow is not even, the implement 2 may have to be able to tilt or rotate around an axis (shown in Fig. 2) in the direction of the movement of the implement carrier device 3 trying to follow the shape of the underlying ground. The rotational feature is further shown Figs. 3a-3c.

Fig. 2 is an exploded view of the attachment device 1 for fastening an implement to an implement carrier vehicle. The main body 4 or frame 4 is fixedly attached to the implement carrier device 3. The main body 4 has elongated holes 5, 7 for receiving and the fastening bolts 6. The fastenings bolts 6 are intended to be able to move freely in the elongated openings 5, 7 having roller bearings 8 for reducing the friction between the inner edges of the elongated opening and the fastening bolts 6. The elongated openings 5 are shaped as arcs being parts of a circle c1 having a centre on the axis x so that the implement may rotate around the axis of rotation x by having the fastening bolts move in the elongated openings 5. The second set of elongated openings 7 are also arc shaped, but along a second circle c2, having a centre point coinciding with the centre point of the circle c1 or at least also being placed on the same axis of rotation x. The axis of rotation x is, as can be seen in Fig. 2, located in at the lower edge of the main body 4, so as to give the attached implement 2 a low centre of rotation close to the ground. The implement 2 is fastened to the attachment device 1 via the intermediate frame 21, which is a part of the implement 2 adapted for attaching the implement 2 to the attachment device 1. The fastening bolts 6 are fixed in the intermediate frame 21. The implement 2 in Fig. 2 is a cutting deck implement but could be any implement that should follow the shape of the underlying ground.

Fig. 2 and Fig 3a-3c all show the possible angular movement α of the implement fastened in the attachment device 1. The elongated openings 5, 7 each have a an angular extension α around the axis of rotation x in the range of 6-50°, preferably 12-40°. The implement is thus allowed to rotate a maximum angle from a center position in the elongated openings in the range of ± 3-25°, preferably 6-20°. In the specific embodiment of Fig. 2, the angel α is chosen to be roughly 11°. The lengths of the elongated openings to allow that angular movement are naturally dependent on the radial distance from axis of rotation. A typical length of the elongated opening is, however, roughly 100 - 300 mm in this particular embodiment. It is understood from the term elongated that the widths of the elongated openings naturally are shorter that the length. The reason to choose the angle α in the ranges above, is to provide a suitable rotational freedom for the implement so that it will be able to follow the ground if the ground is uneven.

Fig. 3a shows in its right part a perspective view of the mounted attachment device of Fig. 2, where the cutting deck implement itself is dashed. The implement is in an end position being able to move only clockwise from there as indicated by the arrow. The same position is shown in the left part of Fig. 3a but seen from behind the implement carrier vehicle along the axis of rotation x. As can be seen the fastening bolts 6 are located at an end point of said elongated openings 5, 7.

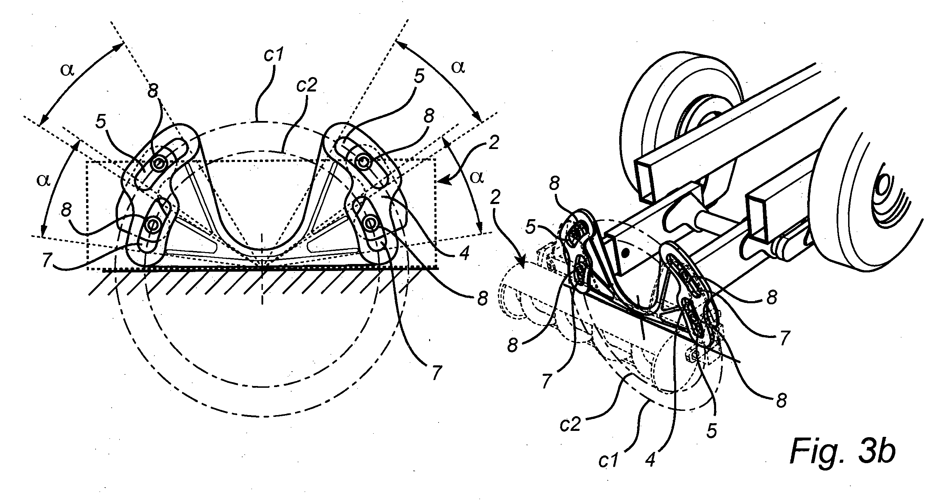

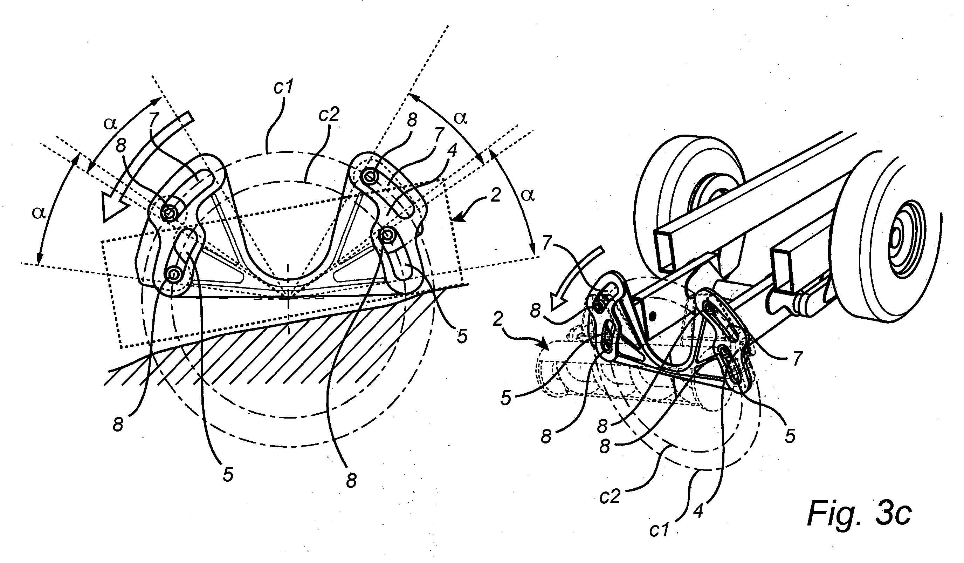

Fig. 3b shows the implement when it has rotated clockwise to a middle position and Fig. 3c shows the implement in the other end position, being able to only rotate counter clockwise from there. As can be seen in all of Fig. 3a - Fig. 3c the movement of the fastening bolts 6 in the elongated openings 7, 8 is facilitated by bearing rollers 8.

## Claims

1. Attachment device (1) for an implement (2) for an implement carrier vehicle (3), wherein the attachment device (1) is adapted to be fixedly attached to a vehicle, said attachment device (1) comprising:
a main body (4) adapted to attach the implement (2) to,
at least two elongated openings (5) in said main body (4) adapted to receive fastening bolts (6) for fastening the implement (2) to the attachment device (1), which bolts can move in the elongated openings (5), **characterised in that** at least two elongated openings being placed so that rotation of the implement (2) around an axis of rotation (x) is limited to the movement of the received bolts (6) in the elongated openings (5),
said axis of rotation (x) is located at a height from the bottom side of said main body (4) of less than 40% of the total height of the main body.

2. Attachment device (1) according to claim 1, wherein the axis of rotation (x) is located at a height from the bottom side of said main body of less than 20% of the total height of the main body, preferably at a height from the bottom side of said main body of less than 10% of the total height of the main body.

3. Attachment device according to any one of the preceding claims,
wherein the axis of rotation (x) is located at or below the bottom surface of the main body.

4. Attachment device according to any one of the preceding claims,
wherein said elongated openings are shaped as arcs, the arcs being part of a circle, said circle (c1) having a centre point in said axis of rotation (x).

5. Attachment device according to any one of the preceding claims,
wherein said attachment device further comprises a second set of at least two elongated openings (7) for receiving fastening bolts (6) for fastening the implement (2) to the attachment device (1), which bolts can move in said second set of at least two elongated openings (7), the second set of at least two elongated openings (7) being placed so that rotation of the implement (2) around an axis of rotation (x) is limited to the movement of the received bolts in said second set of at least two openings, said second set of elongated openings (7) also providing a rotation of the implement around said axis of rotation (x).

6. Attachment device according to claim 5, wherein said second set of elongated openings (7) are shaped as arcs, the arcs being part of a second circle (c2), said second circle (c2) having a centre point on said axis of rotation.

7. Attachment device according to any one of the preceding claims, wherein said main body (4) has a notch for allowing a drive shaft (9) extending from the implement carrier vehicle to the implement to pass through said main body (4) of said attachment device (2).

8. Attachment device according to claim 7, wherein said notch is U-shaped.

9. Attachment device according to any one of the preceding claims,
wherein said axis of rotation x is parallel to the main drive direction of the implement carrier vehicle (3) and/or the drive shaft (9) for the implement.

10. Attachment device according to any one of the preceding claims, wherein said bolts have frictions reducing bearings (8) to facilitate the movement of the bolts (6) in the elongated openings (5, 7).

11. Attachment device according to claim 10, wherein said bearings are roller bearings (8).

12. Attachment device according to any one of the preceding claims, wherein said elongated openings each have a an angular extension (α) around said axis of rotation (x) in the range of 6-50°, preferably 12-40°.

## Patentansprüche

1. Anbauvorrichtung (1) für ein Gerät (2) für ein gerätetragendes Fahrzeug (3), wobei die Anbauvorrichtung (1) dazu geeignet ist, starr an einem Fahrzeug angebaut zu sein, die Anbauvorrichtung (1) umfassend:
einen Hauptkörper (4), der dazu geeignet ist, das Gerät (2) daran anzubauen,
zumindest zwei längliche Öffnungen (5) im Hauptkörper (4), die dazu geeignet sind, Befestigungsschrauben (6) zum Befestigen des Geräts (2) an der Anbauvorrichtung (1) aufzunehmen, wobei sich die Schrauben in den länglichen Öffnungen (5) bewegen können, **dadurch gekennzeichnet, dass** die zumindest zwei länglichen Öffnungen derart angeordnet sind, dass Drehung des Geräts (2) um eine Drehachse (x) auf die Bewegung der aufgenommenen Schrauben (6) in den länglichen Öffnungen (5) beschränkt ist,
wobei sich die Drehachse (x) auf einer Höhe von der Bodenseite des Hauptkörpers (4) von weniger als 40% der Gesamthöhe des Hauptkörpers befindet.

2. Anbauvorrichtung (1) nach Anspruch 1, wobei sich die Drehachse (x) auf einer Höhe von der Bodenseite des Hauptkörpers von weniger als 20% der Gesamthöhe des Hauptkörpers, vorzugsweise auf einer Höhe von der Bodenseite des Hauptkörpers von weniger als 10% der Gesamthöhe des Hauptkörpers befindet.

3. Anbauvorrichtung nach einem der vorhergehenden Ansprüche, wobei sich die Drehachse (x) an oder unterhalb der Bodenfläche des Hauptkörpers befindet.

4. Anbauvorrichtung nach einem der vorhergehenden Ansprüche, wobei die länglichen Öffnungen als Bögen geformt sind, wobei die Bögen Teil eines Kreises sind, wobei der Kreis (c1) einen Mittelpunkt in der Drehachse (x) aufweist.

5. Anbauvorrichtung nach einem der vorhergehenden Ansprüche, wobei die Anbauvorrichtung ferner einen zweiten Satz von zumindest zwei länglichen Öffnungen (7) zum Aufnehmen von Befestigungsschrauben (6) zum Befestigen des Geräts (2) an der Anbauvorrichtung (1) umfasst, wobei sich die Schrauben im zweiten Satz von zumindest zwei länglichen Öffnungen (7) bewegen können, wobei der zweite Satz von zumindest zwei länglichen Schrauben (7) derart angeordnet ist, dass Drehung des Geräts (2) um eine Drehachse (x) auf die Bewegung der aufgenommenen Schrauben im zweiten Satz von zumindest zwei länglichen Öffnungen beschränkt ist, wobei der zweite Satz von länglichen Öffnungen (7) außerdem eine Drehung des Geräts um die Drehachse (x) vorsieht.

6. Anbauvorrichtung nach Anspruch 5, wobei der zweite Satz von länglichen Öffnungen (7) als Bögen geformt sind, wobei die Bögen Teil eines zweiten Kreises (c2) sind, wobei der zweite Kreis (c2) einen Mittelpunkt auf der Drehachse (x) aufweist.

7. Anbauvorrichtung nach einem der vorhergehenden Ansprüche, wobei der Hauptkörper (4) eine Kerbe aufweist, um zu ermöglichen, dass eine Antriebswelle (9) vom gerätetragenden Fahrzeug zum Gerät verläuft, um den Hauptkörper (4) der Anbauvorrichtung (2) zu durchlaufen.

8. Anbauvorrichtung nach Anspruch 7, wobei die Kerbe U-förmig ist.

9. Anbauvorrichtung nach einem der vorhergehenden Ansprüche, wobei die Drehachse (x) parallel zur Hauptfahrrichtung des gerätetragenden Fahrzeugs (3) und/oder zur Antriebswelle (9) für das Gerät ist.

10. Anbauvorrichtung nach einem der vorhergehenden Ansprüche, wobei die Schrauben reibungsmindernde Lager (8) zum Erleichtern der Bewegung der Schrauben (6) in den länglichen Öffnungen (5, 7) aufweisen.

11. Anbauvorrichtung nach Anspruch 10, wobei die Lager Wälzlager (8) sind.

12. Anbauvorrichtung nach einem der vorhergehenden Ansprüche, wobei die länglichen Öffnungen jede eine Winkelausdehnung (α) um die Drehachse (x) im Bereich von 6 bis 50°, vorzugsweise 12 bis 40° aufweisen.

## Revendications

1. Dispositif de fixation (1) d'un outil (2) pour un véhicule porteur d'outil (3), dans lequel le dispositif de fixation (1) est adapté afin d'être rattaché de manière fixe à un véhicule, ledit dispositif de fixation (1) comprenant :
un corps principal (4) adapté pour fixer l'outil (2),
au moins deux ouvertures allongées (5) dans ledit corps principal (4) adaptées afin de recevoir des boulons de fixation (6) pour fixer l'outil (2) au dispositif de fixation (1), lesquels boulons peuvent se déplacer dans les ouvertures allongées (5), **caractérisé en ce que** les deux ouvertures allongées sont placées de sorte qu'une rotation de l'outil (2) autour d'un axe de rotation (x) soit limitée au mouvement des boulons reçus (6) dans les ouvertures allongées (5),
ledit axe de rotation (x) est situé à une hauteur à partir du côté de fond dudit corps principal (4) de moins de 40% de la hauteur totale du corps principal.

2. Dispositif de fixation (1) selon la revendication 1, dans lequel l'axe de rotation (x) est situé à une hauteur à partir du côté de fond dudit corps principal de moins de 20% de la hauteur totale du corps principal, de préférence à une hauteur à partir du côté de fond dudit corps principal de moins de 10% de la hauteur totale du corps principal.

3. Dispositif de fixation selon une quelconque des revendications précédentes, dans lequel l'axe de rotation (x) est situé au niveau de ou au-dessous de la surface de fond du corps principal.

4. Dispositif de fixation selon une quelconque des revendications précédentes, dans lequel lesdites ouvertures allongées sont façonnées comme des arcs, les arcs faisant partie d'un cercle, ledit cercle (c1) ayant un point central dans ledit axe de rotation (x).

5. Dispositif de fixation selon une quelconque des revendications précédentes, dans lequel ledit dispositif de fixation comprend en outre un second ensemble d'au moins deux ouvertures allongées (7) pour recevoir des boulons de fixation (6) pour fixer l'outil (2) au dispositif d'outil (1), lesquels boulons peuvent se déplacer dans ledit second ensemble d'au moins deux ouvertures allongées (7), le second ensemble d'au moins deux ouvertures allongées (7) étant placé de sorte que la rotation de l'outil (2) autour d'un axe de rotation (x) soi limitée au mouvement des boulons reçus dans ledit second ensemble d'au moins deux ouvertures, ledit second ensemble d'ouvertures allongées (7) fournissant aussi une rotation de l'outil autour dudit axe de rotation (x).

6. Dispositif de fixation selon la revendication 5, dans lequel ledit second ensemble d'ouvertures allongées (7) sont façonnés comme des arcs, les arcs faisant partie d'un second cercle (c2), ledit second cercle (c2) ayant un point central sur ledit axe de rotation (x).

7. Dispositif de fixation selon une quelconque des revendications précédentes, dans lequel ledit corps principal (4) possède une encoche pour permettre à un arbre d'entraînement (9) s'étendant à partir du véhicule porteur d'outil vers l'outil de passer à travers ledit corps principal (4) dudit dispositif de fixation (2).

8. Dispositif de fixation selon la revendication 7, dans lequel ladite encoche est en forme de U.

9. Dispositif de fixation selon une quelconque des revendications précédentes, dans lequel ledit axe de rotation (x) est parallèle à la direction d'entraînement principale du véhicule porteur d'outil (3) et/ou de l'arbre d'entraînement (9) pour l'outil.

10. Dispositif de fixation selon une quelconque des revendications précédentes, dans lequel lesdits boulons ont des paliers réducteurs de frictions (8) pour faciliter le mouvement des boulons (6) dans les ouvertures allongées (5, 7).

11. Dispositif de fixation selon la revendication 10, dans lequel lesdits paliers sont des paliers à roulements (8).

12. Dispositif de fixation selon une quelconque des revendications précédentes, dans lequel lesdites ouvertures allongées ont chacune une extension angulaire (α) autour dudit axe de rotation (x) dans la plage de 6-50°, de préférence 12-40°.
